# EUROPÄISCHE PATENTSCHRIFT

(11) **EP 0 658 453 B1**
(45) Veröffentlichungstag und Bekanntmachung des Hinweises auf die Patenterteilung: **04.10.2001**
(21) Anmeldenummer: 94118543.1
(22) Anmeldetag: 25.11.1994
(51) Int. Cl.: B60G 17/015

(54) **Verfahren und Vorrichtung zur Regelung des Kraftfahrzeugniveaus**
Method and device for motor vehicle level control
Procédé et dispositif de régulation de niveau pour véhicule à moteur

(30) Priorität: 16.12.1993 DE 4342920
(43) Veröffentlichungstag der Anmeldung: 21.06.1995
(73) Patentinhaber: ROBERT BOSCH GMBH, 70442 Stuttgart (DE)
(72) Erfinder: Karthaeuser, Klaus, Dipl.-Ing., D-70469 Stuttgart (DE); Werner, Frank, Dipl.-Ing., D-71254 Ditzingen (DE)

(56) Entgegenhaltungen:
- EP-A- 0 174 772
- WO-A-89/09703
- Engfer, O.: "Elektronisch geregelte Luftfederung für Nutzfahrzeuge"; VDI-Berichte Nr. 687: "Elektronik im Kraftfahrzeug"; VDI-Verlag Düsseldorf (DE); 8.-9. September 1988; Seiten 161-181

## Beschreibung

### Stand der Technik

Die Erfindung betrifft ein Verfahren bzw. eine Vorrichtung zur Regelung des Kraftfahrzeugniveaus nach der Gattung des Oberbegriffs der Ansprüche 1/2 bzw. 7/8.

Aus dem Stand der Technik sind in vielfältiger Art und Weise Luftfederungssysteme für Kraftfahrzeuge bekannt. Insbesondere erfordern höhere Anforderungen an den Fahrkomfort und an die Fahrsicherheit auch im Nutzfahrzeugbau bessere Federungssysteme. Luftfederungen sind hierzu besonders geeignet. Neben den konventionellen Systemen zur Luftfederung ist die elektronisch geregelte Luftfederung eine Weiterentwicklung mit dem Ziel, höhere Anforderungen ohne wesentlichen Mehraufwand zu erfüllen. Konventionelle Luftfederungssysteme sowie elektronisch geregelte Luftfederungssysteme sind insbesondere für Nutzfahrzeuge schon im größeren Umfang in der Serienfertigung. Eine umfassende Darstellung konventioneller Luftfederungsanlagen, das heißt mechanischer Luftfederungsanlagen, sowie elektronisch geregelter Luftfederungsanlagen ist in dem Artikel VDI Berichte Nr. 687, 1988, Seite 161 bis 181 zu finden. Die elektronisch geregelte Luftfederung ist dabei ein adaptives System, welches die beiden Teilsysteme Niveauregelung und Niveauverstellung beinhaltet.

Wie in dem oben genannten Artikel zu lesen ist, wirkt sich eine weiche Fahrzeugfederung, wie sie die Luftfederung bietet, vorteilhaft auf den Fahrkomfort aus. Es ergeben sich jedoch daraus Nachteile bei Kurven, Ausweichmanövern mit S-Kurven und Kreisfahrt. Querbeschleunigungen, die auf das Fahrzeug einwirken, führen bei weichen Federn zu einer stärkeren Neigung des Aufbaus als bei harten Federn. Nachteilig kann auch die bei einer Luftfeder vorhandene Progressivität sein, die im Vergleich zu einer linearen Stahlfeder mit gleicher Einfederhärte eine stärkere Querneigung ergibt.

Es wäre denkbar, durch Zuströmen von Druckluft in die kurvenäußeren Luftfedern und gleichzeitiges Abströmen aus den kurveninneren Luftfedern, den Fahrzeugaufbau während einer Kurvenfahrt aufzurichten. Von dieser Möglichkeit wird allerdings nur beschränkt Gebrauch gemacht, da der zu einer ausreichenden Kurvenstabilisation notwendige Energiebedarf erheblich ist. Bei luftgefederten Nutzkraftfahrzeugen, beispielsweise bei Bussen, mit herkömmlicher mechanischer Luftfederungsanlage wird während einer Kurvenfahrt Luft in die kurvenäußeren Luftbälge gepumpt und Luft aus den kurveninneren Bälgen abgelassen. Das führt aber nach Beendigung der Kurvenfahrt zu einem mehr oder minder starken Schiefstand des Fahrzeugs, je nach Länge der Kurve.

Sowohl bei elektronisch sowie bei mechanisch geregelten Luftfederungssystemen wird die Fahrzeugneigung üblicherweise durch mechanische Stabilisatoren beeinflußt. Wenn alle Fahrzeugachsen mit Luftfedern ausgerüstet sind, ist aus regelungstechnischen Gründen notwendig, daß an mindestens einer Achse die Luftfedern gemeinsam versorgt werden. Durch die Verbindung dieser Luftfedern ist die Wankstabilität vermindert. Der Aufwand an Stabilisatoren kann aber verringert werden, wenn bei einer Kurvenfahrt diese Verbindung zwischen den beiden Luftfedern einer Achse abgesperrt wird.

Fahrmanöver wie Kreisfahrt, Kurvenfahrt und Fahrbahnwechsel können über Wegsensoren, den Tacho und ggf. den Lenkwinkelsensor erkannt werden und abhängig von dem Erkennen dieser Fahrmanöver kann die erwähnte Verbindung zwischen den beiden Luftfedern abgesperrt werden.

Bei einer elektronisch geregelten Luftfederung kann der Schiefstand nach Beendigung einer Kurvenfahrt durch die eine Quersperre vermieden werden. Dies kann derart geschehen, daß an einer Achse der Relativabstand zwischen Fahrzeugaufbau und den Radeinheiten an zwei Punkten (je einer an der rechten und linken Fahrzeugseite) gemessen wird. Bei einer Kurvenfahrt treten im allgemeinen gegenläufige Relativweggebersignale auf. Werden diese gegenläufigen Signale vom Steuergerät erkannt, wird die Niveauregelung solange verboten, bis die Kurve beendet ist, das heißt, daß das Fahrzeug in die Waagerechte zurückschwingt und die gegenläufigen Signale wieder verschwinden. Eine solche Quersperre funktioniert bei all den Fahrzeugen, die nach einer Kurvenfahrt selbständig in ihre waagerechte Position zurückkommen und vermeidet unnötige Regelungen, Luftverbrauch und Schiefstände während bzw. nach einer Kurvenfahrt.

Insbesondere bei neuentwickelten Bussen mit Einzelradaufhängung an der Vorderachse arbeitet dieses System der Quersperrung nicht befriedigend.

Aus der EP 0 174 772 A2 ist ein dem jeweiligen Oberbegriff der Ansprüche 1/2 bzw 7/8 entsprechendes System zur Regelung der Fahrzeughöhe bekannt, bei dem die Höhenregelung während einer Kurvenfahrt des Fahrzeugs unterbunden wird.

Aufgabe der vorliegenden Erfindung ist es, die elektronisch geregelte Luftfederung während bzw. nach Ende einer Kurvenfahrt zu optimieren.

Diese Aufgabe wird durch ein Verfahren bzw. durch eine Vorrichtung nach den Ansprüchen 1/2 bzw. 7/8 gelöst.

### Vorteile der Erfindung

Erfindungsgemäß wird, wie im Stand der Technik, während einer Kurvenfahrt des Fahrzeugs die Regelung des Fahrzeugniveaus wenigstens modifiziert. Zur Regelung des Fahrzeugniveaus sind zwei Regelmodi vorgesehen, die sich wenigstens in der Länge ihrer Regelungstotzeiten unterscheiden. Nach Erkennen des Endes einer Kurvenfahrt des Fahrzeugs wird erfindungsgemäß der Regelungsmodus mit der kürzeren Regelungstotzeit ausgewählt.

In einer variante der Erfindung ist vorgesehen, daß nach dem Erkennen des Endes einer Kurvenfahrt des Fahrzeugs zur Wahl des Regelmodus mit der kürzeren Regelungstotzeit zusätzlich eine bestimmte Abweichung vom Sollwert für das Kraftfahrzeugniveau erkannt wird.

Weiterhin kann vorteilhafterweise vorgesehen sein, daß abhängig vom Erkennen des Anfangs einer Kurvenfahrt, insbesondere sofort nach Erkennen des Anfangs einer Kurvenfahrt, die Regelung des Fahrzeugniveaus verboten wird.

Die Erfindung kommt insbesondere bei neuentwickelten Bussen mit Einzelradaufhängung an der Vorderachse zum Tragen. Bei solchen Bussen mit Einzelradaufhängung an der Vorderachse gibt es nämlich folgendes Problem:

Aufgrund hoher Reibwerte bei diesen Achskonstruktionen reicht das Rückstellmoment der Luftfeder nach Beendigung der Kurvenfahrt nicht mehr aus, um das Fahrzeug in seine waagerechte Position zu bringen, das heißt solche Fahrzeuge weisen nach der Kurvenfahrt einen Schiefstand auf, der bis zum nächsten vorgesehenen Niveauregelungszyklus anhalten kann. Da die üblichen Niveauregelungszyklen bzw. Regelungstotzeiten in der Größenordnung von 30 bis 60 Sekunden gewählt werden, kann selbst bei sofortigem Einsetzen der Normalregelung nach Erkennen des Endes der Kurvenfahrt ein Schiefstand des Fahrzeugs bis zu 30 bis 60 Sekunden anhalten.

Bei solchen Fahrzeugen ist eine aus dem Stand der Technik bekannte Quersperre also nicht geeignet, die Erfindung kommt bei solchen Systemen in vorteilhafter Weise zum Einsatz.

In einer vorteilhaften Ausgestaltung ist vorgesehen, daß abhängig vom Erkennen des Endes einer Kurvenfahrt des Fahrzeugs und abhängig vom Erkennen, daß das Kraftfahrzeugniveau eine bestimmte Abweichung vom Sollwert für das Kraftfahrzeugniveau nicht überschreitet, der Regelungsmodus mit der längeren Regelungstotzeit ausgewählt wird.

Weiterhin kann vorgesehen sein, daß die kürzere Regelungstotzeit im wesentlichen Null ist, daß also nach Erkennung des Endes einer Kurvenfahrt des Fahrzeugs und nach Erkennen einer bestimmten Abweichung vom Sollwert für das Kraftfahrzeugniveau im wesentlichen sofort, das heißt im wesentlichen ohne Verzögerung, das Fahrzeugniveau auf den Sollwert geregelt wird.

Das Erkennen des Anfangs und/oder des Endes einer Kurvenfahrt des Fahrzeugs kann durch die Auswertung des sensierten Relativabstands zwischen dem Fahrzeugaufbau und den Rädern geschehen. Hierbei wird der Anfang und/oder das Ende einer Kurvenfahrt dann erkannt, wenn sich die Relativabstände auf der rechten und der linken Fahrzeugseite einer Achse gegenläufig verhalten.

Besonders vorteilhaft ist es, das Erkennen des Anfangs und/oder des Endes einer Kurvenfahrt des Fahrzeugs durch eine Auswertung des sensierten Lenkwinkels des Fahrzeugs vorzunehmen. Hierbei kann die Schaltstellung eines Lenkwinkelschalters erkannt werden, oder statt eines Lenkwinkelschalters ein Lenkwinkelsensor verwendet werden.

Bei der Verwendung eines Lenkwinkelschalters wird dieser Schalter derart angebracht, daß ein Signal an das Niveauregelungssteuergerät dann abgegeben wird, wenn der Lenkwinkel, im allgemeinen der Winkel des vom Fahrer betätigten Lenkrades, anzeigt, daß die Lenkradstellung ein gewisses Maß von der Geradeausstellung abweicht. Wird dieses Signal vom Steuergerät erkannt, so wird die Niveauregelung, solange das Signal ansteht, verboten. Am Ende der Kurve, wenn das Lenkrad also wieder in der Geradeausrichtung steht, gibt der Lenkwinkelschalter kein Signal mehr an das Steuergerät. Erkennt das Steuergerät, daß das Signal wieder abgeschaltet ist, so wird die Niveauregelung abhängig von den Weggebersignalen (Relativabstand zwischen Fahrzeugaufbau und Radeinheiten) nach einer bestimmten Zeitverzögerung (beispielsweise 3 Sekunden) aktiviert. Melden die Weggeber ein Schiefstand des Fahrzeugs, wird in einen Regelungsmodus geschaltet, der eine im allgemeinen relativ kurze Regelungstotzeit aufweist. Wie schon erwähnt, wird diese Regelungstotzeit vorteilhafterweise sehr kurz, also im wesentlichen gegen Null, gewählt werden. Bei erkanntem Schiefstand des Fahrzeugs nach einer Kurvenfahrt wird also sofort eine Korrektur des Fahrzeugniveaus durchgeführt. Melden die Weggeber, daß das gewünschte Fahrzeugniveau erreicht ist, wird erfindungsgemäß ein zweiter, im allgemeinen für den Normalbetrieb (Geradeausfahrt) vorgesehener Regelungsmodus gewählt, der die normale Regelungstotzeit für Geradeausfahrt (beispielsweise 30 bis 60 Sekunden) aufweist.

Zusammenfassend sind also folgende Vorteile der Erfindung festzuhalten:
- Keine Schiefstände wie bei Fahrzeugen mit mechanischer Luftfederung.
- Keine Schiefstände bei Fahrzeugen mit hoher Reibung im Fahrwerk.
- Minimierung der Regelhäufigkeit und damit des Luftverbrauchs.
- Keine Regelung in der Kurve, nach der Kurve treten Regelungen nur dann auf, wenn tatsächlich ein Schiefstand des Fahrzeugs vorhanden ist.

Weitere vorteilhafte Ausgestaltungen der Erfindung sind den Unteransprüchen zu entnehmen.

### Zeichnungen

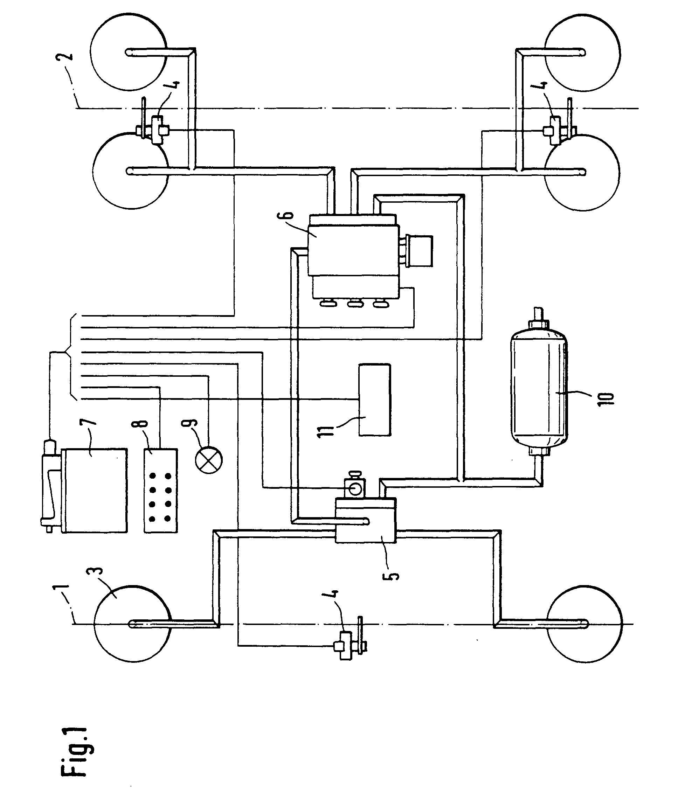

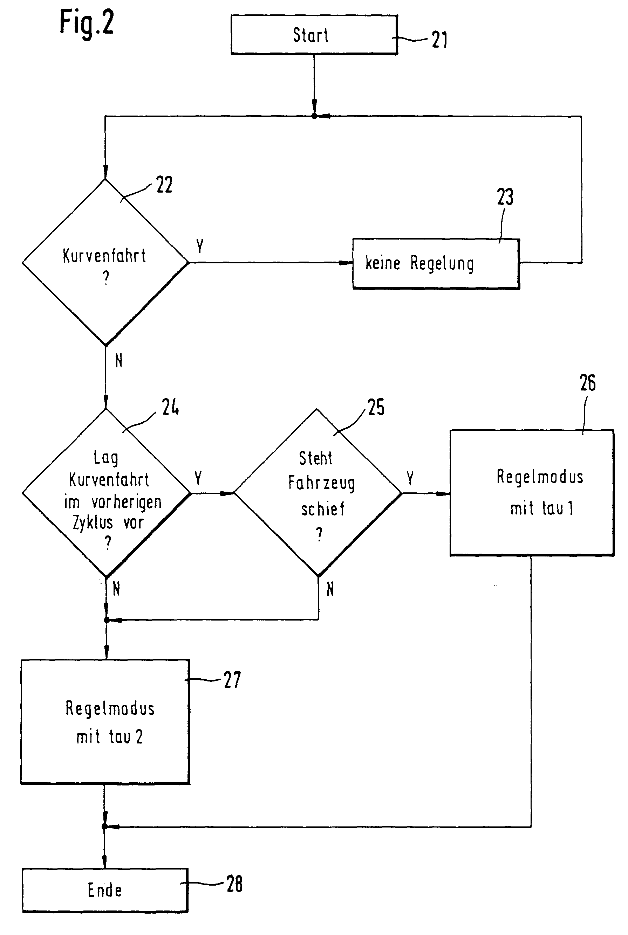

Anhand der Figuren 1 und 2 soll die Erfindung im Rahmen eines Ausführungsbeispiels genauer beschrieben werden. Die Figur 1 zeigt dabei schematisch eine elektronisch geregelte Luftfederung, während die Figur 2 den erfindungsgemäßen Ablauf beschreibt.

### Ausführungsbeispiele

Im folgenden soll anhand eines Ausführungsbeispiels die Erfindung näher beschrieben werden. Zur Vermeidung der Beschreibung von Einzelheiten einer elektronisch geregelten Luftfederung wird auf den schon erwähnten Artikel VDI Berichte Nr. 687, 1988, Seite 161 bis 181 verwiesen.

Die Figur 1 zeigt schematisch eine elektronisch geregelte Luftfederung für einen Bus oder einen LKW. Mit den Bezugszeichen 1 und 2 ist die Vorder- bzw. Hinterachse markiert. Zwischen dem nicht dargestellten Fahrzeugaufbau und den Achsen bzw. den nicht dargestellten Radeinheiten sind mit den Bezugszeichen 4 Niveaugeber angeordnet, die an das Steuergerät für die elektronische Niveauregelung aktuelle Werte für den Relativabstand zwischen Achse und Fahrzeugaufbau liefern. Mit den Bezugszeichen 5 ist ein Magnetventil und mit dem Bezugszeichen 6 ein Magnetventilblock zu sehen. Durch Ansteuerungen der Magnetventile durch das Steuergerät 7 kann den Luftfederbälgen 3 gezielt Luft zugeführt oder Luft aus den Luftfederbälgen 3 abgeleitet werden. Weiterhin ist mit dem Bezugszeichen 8 eine Fernbedienung bezeichnet und mit dem Bezugszeichen 9 eine Warnlampe. Das Gesamtsystem wird durch den Vorratsbehälter 10 mit Luft versorgt. Dem Steuergerät 7 werden die Signale eines Lenkwinkelschalters bzw. eines Lenkwinkelsensors 11 zugeführt.

Soweit es den Kern der Erfindung betrifft, wird der Ablauf im Steuergerät 7 anhand der Figur 2 beschrieben. Zur detaillierten Beschreibung der Funktionen, die nicht zu der Erfindung gehören, sei auf den schon erwähnten Artikel VDI Berichte Nr. 687, 1988, Seite 161 bis 181 verwiesen. Nach dem Start (Schritt 21) wird im Schritt 22 abgefragt, ob eine Kurvenfahrt vorliegt. Wie schon erwähnt, wird zum Erkennen einer Kurvenfahrt dem Steuergerät 7 das Signal eines Lenkwinkelsensors bzw. eines Lenkwinkelschalters 11 zugeführt. Dieser Lenkwinkelsensor 11 detektiert dabei die Stellung des vom Fahrer betätigten Lenkrades. Befindet sich das Fahrzeug in einer Geradeausfahrt (Lenkrad in Geradeausstellung), so wird nach dem Schritt 22 im Schritt 24 abgefragt, ob im vorhergehenden Programmzyklus eine Kurvenfahrt detektiert worden war. Ist dies nicht der Fall, das heißt, daß sich das Fahrzeug auch im vorhergehenden Programmzyklus im Zustand einer Geradeausfahrt befand, so wird im Schritt 27 der Normalregelmodus mit einer Regeltotzeit tau2 gewählt. Wie schon erwähnt, ist es bei solchen Systemen im allgemeinen nicht erwünscht, dynamische Niveauveränderungen, die durch Fahrbahnunebenheiten induziert werden, auszuregeln. Der im Schritt 27 erwähnte Regelmodus für die Geradeausfahrt wird also im allgemeinen derart beschaffen sein, daß eine relativ hohe Regelungstotzeit tau2 (ca. 30 bis 60 Sekunden) vorliegt. Nach dem Endschritt 28 wird im Schritt 21 der nächste Programmzyklus gestartet.

Liegt nun nach einer Geradeausfahrt der Anfang einer Kurvenfahrt vor, so wird nach dem Schritt 22 im Schritt 23 veranlaßt, daß die Niveauregelung unterbunden wird. Durch eine solche Quersperre während einer Kurvenfahrt werden, wie erwähnt, unnötige Niveauregelungen vermieden, wodurch der Luftverbrauch minimiert wird. Wird nun am Ende einer Kurvenfahrt im Schritt 22 wieder eine Geradeausfahrt detektiert, so wird nach dem Schritt 24 im Schritt 25 die Schieflage des Fahrzeugs erfaßt. Hierzu werden die Signale der Niveaugeber 4 an der rechten und linken Fahrzeugseite einer Achse ausgewertet. Steht das Fahrzeug schief, das heißt sind die Weggebersignale der linken und rechten Fahrzeugseite gegenläufig und überschreitet die Differenz der Weggebersignale eine bestimmte Schwelle, so wird im Schritt 26 ein Regelmodus mit einer sehr kurzen Regelungstotzeit tau1 ausgewählt. Im allgemeinen wird tau2 nahe 0 oder im Sekundenbereich liegen. Im Schritt 26 wird also nach dem Erkennen des Endes einer Kurvenfahrt möglichst schnell der im Schritt 25 detektierte Fahrzeugschiefstand korrigiert. Nach dem Ende (Schritt 28) des Zyklus wird im Schritt 21 der Programmzyklus erneut gestartet.

Es sei noch darauf hingewiesen, daß auf den Schritt 25 verzichtet werden kann. In diesem Fall wird nach dem Erkennen des Endes einer Kurvenfahrt (Schritt 22, 24) in jedem Fall zunächst der Regelmodus 26 gewählt.

## Patentansprüche

1. Verfahren zur Regelung des Kraftfahrzeugniveaus auf einen Sollwert, wobei während einer Kurvenfahrt des Fahrzeugs die Regelung des Fahrzeugniveaus wenigstens modifiziert wird, **dadurch gekennzeichnet, dass**
- zur Regelung des Fahrzeugniveaus außerhalb einer Kurvenfahrt wenigstens zwei Regelmodi (26, 27) vorgesehen sind, die sich wenigstens in der Länge ihrer Regelungstotzeit (taul, tau2) unterscheiden, und
- nach Erkennen (22, 24) des Endes einer Kurvenfahrt des Fahrzeugs der Regelungsmodus (26) mit der kürzeren Regelungstotzeit (tau1) ausgewählt wird.

2. Verfahren zur Regelung des Kraftfahrzeugniveaus auf einen Sollwert, wobei während einer Kurvenfahrt des Fahrzeugs die Regelung des Fahrzeugniveaus wenigstens modifiziert wird,
**dadurch gekennzeichnet, dass**
- zur Regelung des Fahrzeugniveaus außerhalb einer Kurvenfahrt wenigstens zwei Regelmodi (26, 27) vorgesehen sind, die sich wenigstens in der Länge ihrer Regelungstotzeit (taul, tau2) unterscheiden, und
- nach Erkennen (22, 24) des Endes einer Kurvenfahrt des Fahrzeugs der Regelungsmodus (26) mit der kürzeren Regelungstotzeit (tau1) dann ausgewählt wird, wenn eine bestimmte Abweichung vom Sollwert für das Kraftfahrzeugniveau erkannt wird, wobei insbesondere vorgesehen ist, **dass** als bestimmte Abweichung eine Schieflage des Fahrzeugaufbaus (25) erkannt wird.

3. Verfahren nach Anspruch 1 oder 2, **dadurch gekennzeichnet, dass** abhängig vom Erkennen (22) des Anfangs einer Kurvenfahrt die Regelung des Fahrzeugniveaus derart modifiziert wird, **dass** die Regelung unterbleibt.

4. Verfahren nach Anspruch 2, **dadurch gekennzeichnet, dass** abhängig vom Erkennen (22, 24) des Endes der Kurvenfahrt des Fahrzeugs und abhängig vom Erkennen, **dass** das Kraftfahrzeugniveau eine bestimmte Abweichung vom Sollwert für das Kraftfahrzeugniveau unterschreitet, der Regelungsmodus (27) mit der längeren Regelungstotzeit (tau2) ausgewählt wird.

5. Verfahren nach Anspruch 1 oder 2, **dadurch gekennzeichnet, dass** die kürzere Regelungstotzeit (tau1) im Wesentlichen gegen Null gewählt wird.

6. Verfahren nach Anspruch 1 oder 2, **dadurch gekennzeichnet, dass**
- das Erkennen (22, 24) des Anfangs und/oder des Endes einer Kurvenfahrt des Fahrzeugs durch eine Auswertung des sensierten Relativabstandes zwischen dem Fahrzeugaufbau und den Rädern geschieht, und/oder
- der Anfang und/oder das Ende einer Kurvenfahrt des Fahrzeugs dann erkannt wird, wenn sich die Relativabstände auf der rechten und linken Fahrzeugseite gegenläufig verhalten, und/oder
- das Erkennen (22, 24) des Anfangs und/oder des Endes einer Kurvenfahrt des Fahrzeugs durch eine Auswertung des sensierten Lenkwinkels des Fahrzeugs geschieht, und/oder
- der Anfang und/oder das Ende einer Kurvenfahrt des Fahrzeugs durch die Schaltstellung eines Lenkwinkelschalters erkannt wird.

7. Vorrichtung zur Durchführung des Verfahrens nach Anspruch 1 mit einem Niveauregelungssteuergerät (7) und Niveaugeber (4) zur Erfassung aktueller Werte des Relativabstandes zwischen Achse und Fahrzeugaufbau, wobei im Niveauregelungssteuergerät (7) erste Mittel (22, 23) vorgesehen sind, mittels der während einer Kurvenfahrt des Fahrzeugs die Regelung des Fahrzeugniveaus wenigstens modifiziert wird, **dadurch gekennzeichnet, dass**
- im Niveauregelungssteuergerät (7) zweite Mittel (26, 27) vorgesehen sind, mittels der zur Regelung des Fahrzeugniveaus außerhalb einer Kurvenfahrt wenigstens zwei Regelmodi (26, 27) vorgesehen sind, die sich wenigstens in der Länge ihrer Regelungstotzeit (taul, tau2) unterscheiden, und
- im Niveauregelungssteuergerät (7) dritte Mittel (24, 25) vorgesehen sind, mittels der nach Erkennen (22, 24) des Endes einer Kurvenfahrt des Fahrzeugs eine Regelung mit dem Regelungsmodus mit der kürzeren Regelungstotzeit (tau1) erfolgt.

8. Vorrichtung zur Durchführung des Verfahrens nach Anspruch 2 mit einem Niveauregelungssteuergerät (7) und Niveaugeber (4) zur Erfassung aktueller Werte des Relativabstandes zwischen Achse und Fahrzeugaufbau, wobei im Niveauregelungssteuergerät (7) erste Mittel (22, 23) vorgesehen sind, mittels der während einer Kurvenfahrt des Fahrzeugs die Regelung des Fahrzeugniveaus wenigstens modifiziert wird, **dadurch gekennzeichnet, dass**
- im Niveauregelungssteuergerät (7) zweite Mittel (26, 27) vorgesehen sind, mittels der zur Regelung des Fahrzeugniveaus außerhalb einer Kurvenfahrt wenigstens zwei Regelmodi (26, 27) vorgesehen sind, die sich wenigstens in der Länge ihrer Regelungstotzeit (taul, tau2) unterscheiden, und
- im Niveauregelungssteuergerät (7) dritte Mittel (24, 25) vorgesehen sind, mittels der nach Erkennen (22, 24) des Endes einer Kurvenfahrt des Fahrzeugs und nach Erkennen einer bestimmten Abweichung vom Sollwert für das Kraftfahrzeugniveau eine Regelung mit dem Regelungsmodus mit der kürzeren Regelungstotzeit (tau1) erfolgt, wobei insbesondere vorgesehen ist, **dass** als bestimmte Abweichung eine Schieflage des Fahrzeugaufbaus (25) erkannt wird.

9. Vorrichtung nach Anspruch 7 oder 8, **dadurch gekennzeichnet, dass** Mittel (1) zur Erkennung des Lenkwinkels des Fahrzeugs vorgesehen sind.

## Claims

1. Method for regulating the motor vehicle level to a desired value, the regulation of the vehicle level being at least modified during cornering of the vehicle, **characterized in that**
- for regulating the vehicle level outside cornering at least two regulating modes (26, 27) are provided which differ from one another at least in the length of their regulation idle time (tau1, tau2), and
- after the detection (22, 24) of the end of a cornering of the vehicle the regulating mode (26) with the shorter regulation idle time (tau1) is selected.

2. Method for regulating the motor vehicle level to a desired value, the regulation of the vehicle level being at least modified during cornering of the vehicle, **characterized in that**
- for regulating the vehicle level outside cornering at least two regulating modes (26, 27) are provided which differ from one another at least in the length of their regulation idle time (tau1, tau2), and
- after the detection (22, 24) of the end of a cornering of the vehicle regulating mode (26) with the shorter regulation idle time (tau1) is selected when a specific deviation from the desired value for the motor vehicle level is detected, there being provision, in particular, for the specific deviation detected to be a slant of the vehicle body (25).

3. Method according to Claim 1 or 2, **characterized in that**, as a function of the detection (22) of the start of cornering, the regulation of the vehicle level is modified in such a way that regulation ceases.

4. Method according to Claim 2, **characterized in that**, as a function of the detection (22, 24) of the end of cornering of the vehicle and as a function of the detection that the motor vehicle level falls short of a specific deviation from the desired value for the motor vehicle level, the regulating mode (27) with the longer regulation idle time (tau2) is selected.

5. Method according to Claim 1 or 2, **characterized in that**, the shorter regulation idle time (tau1) is selected essentially towards zero.

6. Method according to Claim 1 or 2, **characterized in that**
- the detection (22, 24) of the start and/or end of cornering of the vehicle takes place by means of an evaluation of the sensed relative distance between the vehicle body and the wheels, and/or
- the start and/or end of cornering of the vehicle is detected when the relative distances on the right-hand and the left-hand sides of the vehicle behave in opposition, and/or
- the detection (22, 24) of the start and/or end of cornering of the vehicle takes place by means of an evaluation of the sensed steering angle of the vehicle, and/or
- the start and/or end of cornering of the vehicle is detected by means of the switching position of a steering-angle switch.

7. Device for carrying out the method according to Claim 1, with a level-regulation control unit (7) and level transmitter (4) for recording current values of the relative distance between axle and vehicle body, there being provided in the level-regulation control unit (7) first means (22, 23) by which the regulation of a vehicle level is at least modified during cornering of the vehicle, **characterized in that**
- there are provided in the level-regulation control unit (7) second means (26, 27) by which for regulating the vehicle level outside cornering at least two regulating modes (26, 27) are provided which differ from one another at least in the length of their regulation idle time (tau1, tau2), and
- there are provided in the level-regulation control unit (7) third means (24, 25) by which after the detection (22, 24) of the end of cornering of the vehicle a regulation by means of the regulating mode with the shorter regulation idle time (tau1) takes place.

8. Device for carrying out the method according to Claim 2, with a level-regulation control unit (7) and level transmitter (4) for recording current values of the relative distance between axle and vehicle body, there being provided in the level-regulation control unit (7) first means (22, 23) by which the regulation of the vehicle level is at least modified during cornering of the vehicle, **characterized in that**
- there are provided in a level-regulation control unit (7) second means (26, 27) by which for regulating the vehicle level outside cornering at least two regulating modes (26, 27) are provided which differ from one another at least in the length of their regulation idle time (tau1, tau2), and
- there are provided in a level-regulation control unit (7) third means (24, 25) by which, after the detection (22, 24) of the end of cornering of the vehicle and after the detection of a specific deviation from the desired value for the vehicle level, a regulation by means of the regulating mode with the shorter regulation idle time (tau1) takes place, there being provision, in particular, for the specific deviation detected to be a slant of the vehicle body (25).

9. Device according to Claim 7 or 8, **characterized in that in that** means (1) for detecting the steering angle of the vehicle are provided.

## Revendications

1. Procédé de régulation de l'assiette d'un véhicule automobile en fonction d'une valeur de consigne, selon lequel, dans un déplacement en courbe du véhicule, on modifie au moins la régulation d'assiette du véhicule,
**caractérisé en ce que**
- pour réguler l'assiette du véhicule en dehors d'un déplacement en courbe, il est prévu au moins deux modes de régulation (26, 27) qui se distinguent au moins par la durée de leur temps mort de régulation (tau1, tau2), et
- après détection de la fin d'une trajectoire en courbe du véhicule (22, 24), on sélectionne le mode de régulation (26) ayant le temps mort de régulation le plus court (tau1).

2. Procédé de régulation de l'assiette d'un véhicule automobile en fonction d'une valeur de consigne, selon lequel pendant le déplacement en courbe du véhicule on modifie au moins la régulation de l'assiette du véhicule,
**caractérisé en ce que**
- pour réguler l'assiette du véhicule en dehors de son déplacement en courbe, il est prévu au moins deux modes de régulation (26, 27) qui se distinguent au moins par la durée de leur temps mort de régulation (tau1, tau2), et
- après détection (22, 24) de la fin d'un déplacement du véhicule dans une courbe, on sélectionne le mode de régulation (26) ayant le temps mort de régulation le plus court (tau1) si on détecte une certaine déviation de l'assiette du véhicule par rapport à la valeur de consigne, et il est notamment prévu, comme certaines déviations, la position inclinée de la carrosserie (25) du véhicule.

3. Procédé selon l'une quelconque des revendications 1 ou 2,
**caractérisé en ce qu'**
en fonction de la détection (22) de l'amorce d'un déplacement en courbe, on modifie la régulation de l'assiette du véhicule pour interdire la régulation.

4. Procédé selon la revendication 2,
**caractérisé en ce qu'**
en fonction de la détection (22, 24) de la fin du déplacement en courbe du véhicule et en fonction de la détection de ce que l'assiette du véhicule passe en dessous d'une certaine déviation par rapport à la valeur de consigne de l'assiette, on sélectionne le mode de régulation (27) à temps mort de régulation le plus long (tau2).

5. Procédé selon l'une quelconque des revendications 1 ou 2,
**caractérisé en ce qu'**
on choisit comme temps mort de régulation plus court (tau1), un temps mort essentiellement nul.

6. Procédé selon l'une quelconque des revendications 1 ou 2,
**caractérisé en ce que**
- on détecte (22, 24) le début et/ou la fin d'un déplacement en courbe du véhicule par l'exploitation de l'écart relatif algébrique entre la carrosserie du véhicule et les roues, et/ou
- on détecte le début et/ou la fin d'une trajectoire en courbe du véhicule si l'écart relatif entre le côté droit et le côté gauche du véhicule se comporte de manière opposée, et/ou
- on détecte (22, 24) le début et/ou la fin d'une trajectoire courbe du véhicule par l'exploitation de l'angle de braquage algébrique du véhicule, et/ou
- on détecte le début et/ou la fin d'une trajectoire courbe du véhicule par la position de commutation d'un commutateur d'angle de braquage.

7. Dispositif pour la mise en oeuvre du procédé selon la revendication 1 avec un appareil de commande de régulation d'assiette (7) et un capteur d'assiette (4) pour détecter la valeur actuelle de la distance relative entre l'essieu et la carrosserie du véhicule,
l'appareil de commande de régulation d'assiette (7) comportant des premiers moyens (22, 23) à l'aide desquels, pendant un déplacement en courbe du véhicule, on modifie au moins la régulation de l'assiette du véhicule,
**caractérisé en ce que**
- l'appareil de commande de régulation de niveau (7) comporte des seconds moyens (26, 27) permettant au moins deux modes de régulation (26, 27) pour réguler l'assiette du véhicule en dehors de son déplacement en courbe, ces deux modes se distinguant au moins par la longueur de leur temps mort de régulation (tau1, tau2), et
- l'appareil de commande de régulation d'assiette (7) comporte des troisièmes moyens (24, 25) à l'aide desquels, après détection (22, 24) de la fin d'une trajectoire en courbe du véhicule, on réalise une régulation avec le mode de régulation ayant le temps mort de régulation le plus court (tau1).

8. Dispositif pour la mise en oeuvre du procédé selon la revendication 2 avec un appareil de commande de régulation de niveau (7) et un capteur de niveau (4) pour détecter les valeurs actuelles de la distance relative entre l'essieu et la carrosserie du véhicule,
l'appareil de commande de régulation de niveau (7) comprenant des premiers moyens (22, 23) à l'aide desquels, pendant le déplacement en courbe du véhicule, on modifie au moins la régulation de l'assiette du véhicule,
**caractérisé en ce que**
- l'appareil de commande de régulation de niveau (7) comporte des seconds moyens (26, 27) à l'aide desquels, pour réguler l'assiette du véhicule en dehors d'un déplacement en courbe, il y a au moins deux modes de régulation (26, 27) qui se distinguent au moins par la longueur de leur temps mort de régulation (tau1, tau2), et
- l'appareil de commande de régulation d'assiette (7) comporte des troisièmes moyens (24, 25) à l'aide desquels, après détection (22, 24) de la fin d'une trajectoire en courbe du véhicule et après détection d'une certaine déviation par rapport à la valeur de consigne de l'assiette du véhicule, on assure une régulation avec le mode de régulation ayant le temps mort de régulation le plus court (tau1) et la déviation déterminée est notamment l'inclinaison de la carrosserie (25).

9. Dispositif selon l'une quelconque des revendications 7 ou 8,
**caractérisé par**
des moyen (1) pour détecter l'angle de braquage du véhicule.
